**Europäisches Patentamt**

(19) **European Patent Office**

**Office européen des brevets**

(11) Veröffentlichungsnummer: **0 238 048**
**B1**

(12) **EUROPÄISCHE PATENTSCHRIFT**

(45) Veröffentlichungstag der Patentschrift:
05.09.90

(51) Int. Cl.⁵: **C04B 18/06**
// F23C11/02, F23J3/06

(21) Anmeldenummer: 87103867.5

(22) Anmeldetag: 17.03.87

(54) Verfahren zur Herstellung von körnigen Mineralstoffen aus Kohleabbränden.

(30) Priorität: 18.03.86 DE 3608920

(43) Veröffentlichungstag der Anmeldung:
23.09.87 Patentblatt 87/39

(45) Bekanntmachung des Hinweises auf die Patenterteilung:
05.09.90 Patentblatt 90/36

(84) Benannte Vertragsstaaten:
BE DE FR GB IT NL SE

(56) Entgegenhaltungen:
EP-A- 0 059 444
EP-A- 0 173 782
FR-A- 2 546 508
US-A- 4 344 796

ZEMENT, KALK, GIPS, Band 74, Nr. 7, Juli 1985,
Seiten 374-378, Wiesbaden, Biebrich, DE; J. LOTZE et
al.: "Kenndaten und Verwertungsmöglichkeiten von
Aschen aus einer Feuerungsanlage mit zirkulierender
Wirbelschicht"
ZEMENT-KALK-GIPS, 38, Seiten 239-43 (1985)

(73) Patentinhaber: Ackermann, Manfred F., Dipl.-Ing.,
Heidestrasse 49, D-4630 Bochum 6(DE)

(72) Erfinder: Ackermann, Manfred F., Dipl.-Ing.,
Heidestrasse 49, D-4630 Bochum 6(DE)

(74) Vertreter: Schulte, Jörg, Dipl.-Ing., Hauptstrasse 2,
D-4300 Essen-Kettwig(DE)

**Beschreibung**

Die Erfindung betrifft ein Verfahren zur Herstellung von körnigen Mineralstoffen aus Kohleabbränden von Wirbelschichtanlagen mit Bettemperaturen < 900° C und unter Kalkzugaben.

Kohleabbrände werden zunehmend nicht mehr deponiert, sondern als Rohstoff einer weitgefächerten Nutzung zugeführt. Diese Nutzungen werden aber dadurch erschwert, daß die Zusammensetzungen der Abbrände vergleichsweise heterogen sind und teilweise auch Verunreinigungen und Schadstoffe enthalten sein können.

Jede zusätzliche technische Verwendungsmöglichkeit der Abbrände vermindert die Belastung der Umwelt, fängt die Kosten für eine Abfallbeseitigung teilweise auf und beugt insbesondere der Erschöpfung herkömmlicher Baustofflagerstätten vor.

Eine Eignung der Abbrände z.B. als Mörtel- und Betonzuschlagstoffe ist nur gegeben, wenn bestimmte betontechnologische Normen bzw. Zulassungsrichtlinien erfüllt werden. So ist etwa die Verwendung von Flugaschen als Zusatzstoffe für Beton nur erlaubt, wenn diese ein Prüfzeichen des Instituts für Bautechnik erhalten haben.

In der Feuerungstechnik werden zunehmend. Wirbelschichtfeuerungsanlagen eingesetzt, die mit ballasthaltigen Brennstoffen befeuert werden, bei denen erhebliche Aschemengen anfallen. Diese Aschen sind bislang vergleichsweise uneinheitlich, so daß ihrer technischen Verwendung Grenzen gesetzt sind.

Aus der DE-OS 22 04 175 ist ein gattungsgemäßes Verfahren zur Herstellung von künstlichen Puzzolanen aus Abgängen von Kohleaufbereitungen als Bindemittelkomponente in Beton bekannt, bei dem diese mehlfein gemahlen und mit Kalk und/oder Portlandzement vermischt werden, wobei diese Abgänge in einer Wirbelschicht von inertem, körnigen Material bei etwa 700 bis 1000° C gebrannt werden und Hilfsbetten aus Schamotte- und Ziegelbruch oder aus Kalk verwendet werden. Bei der Herstellung von künstlichen Puzzolanen, d. h. von hydraulisch wirkenden Bindemittelkomponenten, ist eine mehlfeine Mahlung und ein Vermischen mit Kalk und/oder Portlandzement erforderlich, um ein Bindemittel herzustellen. Die Herstellung eines Zuschlagstoffes ist nicht Gegenstand dieses Verfahrens.

Die auf diese Weise erzeugten körnigen Zuschlagstoffe zeichnen sich durch eine einheitliche Stoffqualität und gleichbleibende Qualitätseigenschaften aus, ohne daß ein besonderes Nacharbeiten des Brenngutes erforderlich ist, etwa Nachbrennen oder Mahlen. Es ist lediglich ein Absieben wie bei anderen Zuschlagstoffen aus natürlichem Vorkommen zur Endprodukterzeugung nötig.

Der Erfindung liegt die Aufgabe zugrunde, ein Verfahren zur Herstellung von körnigen Zuschlagstoffen aus Kohleabbränden zu finden, das einheitliche Stoffqualitäten und zuverlässig gleichbleibende Qualitätseigenschaften der Abbrände insgesamt gewährleistet und somit die Verwendung der Kohleabbrände als Zuschlagstoffe erlaubt.

Diese Aufgabe wird durch die kennzeichnenden Maßnahmen des Patentanspruchs 1 gelöst. Weiterbildungen sind in den Unteransprüchen wiedergegeben.

Durch das erfindungsgemäße Verfahren werden Entsorgungsprobleme gelöst und gleichzeitig eine Schonung der bestehenden Lagerstätten für körnige Mineralstoffe erzielt. Wegen des vergleichsweise hohen Ascheanfalls sind Wirbelschichtanlagen mit Bettemperaturen < 900° C beachtliche Rohstofflieferanten.

Um zu einer Vergleichmäßigung der Abbrände zu gelangen, ist es erfindungsgemäß erforderlich, nach Feuchte, Körnung, Heizwert und Schadstoffgehalt möglichst gleichmäßige Einsatzbrennstoffe zu verwenden und die Verweilzeiten der Partikel des Aufgabegutes im Fluidbett so zu steuern, daß möglichst wenig Glühverluste (Restkohlenstoff) anfallen sowie die Tonminerale soweit entwässert werden, daß bei erneuter Wasserzugabe keine das Bindemittelgerüst zerstörende Volumenzunahmen mehr auftreten, und die zulässigen Chloridgehalte nicht überschritten werden. Die Schwefelemission wird durch die Kalkzugabe im zulässigen Rahmen gehalten. Durch die Wahl der Kalkart und -sorte sowie die Optimierung der Kalkzugabe, die zweckmäßig getrennt von der Brennstoffeinspeisung erfolgen sollte, kann zugleich die Menge des durch Anhydrit und Branntkalk verunreinigten Ascheanteils niedrig gehalten werden. Um diesen Ascheanteil nur mit gelöschten Kalkverbindungen zu belasten, empfiehlt es sich, den Kalk trocken als Hydratkalk zuzugeben und dessen Einspeisung gemäß einer Abwandlung in den kälteren Teil der Abgasanlage vorzunehmen.

Neben den vorgenannten Maßnahmen in der Wirbelschichtfeuerungsanlage selbst, sind für die Erzeugung geeigneter körniger Mineralstoffe Nachbehandlungsschritte der Abbrände vorteilhaft. Die verschiedenen Abbrandarten, wie Bettasche, Kesselasche und Flugasche sollten, da sie unterschiedliche Eigenschaften aufweisen, getrennt gesammelt, sortiert und weiterverarbeitet werden. Eine bevorzugte Anwendungsart ist die Verwendung als Mörtel- und Betonzuschläge. Dabei ist zu beachten, daß die Zuschläge für Leichtbeton bzw. Leichtbetonkörper andere Zusammensetzungen erfordern als für porenarme Betone oder Betonkörper. Für erstere sind insbesondere die gröberen und porigen Fraktionen besser geeignet. Die kalkfreie Fraktion 1 - 0 mm eignet sich besonders als Zuschlagstoff für Spritzbetone, Dammbaustoff, dichte Betone und zur Verbesserung natürlicher Körnungen. Kalkhaltige Körnungen ≤ 1,0 mm sind besonders als Zuschlagstoff für Quell- und Porenbetone sowie Gipsbauteile geeignet. Es empfiehlt sich, für die Wirbelschichtverbrennung Brennstoffe zu verwenden, die eine selbstgängige Verbrennung ermöglichen.

Die Erfindung wird nachfolgend anhand von Beispielen und der Zeichnung näher erläutert. Es zeigen

Fig. 1 in einem Diagramm die Abhängigkeit der Kalkbelastung und der Glühverluste von der Körnung des Einsatzbrennstoffes und der Schwefelbelastung sowie von der Verweildauer der Partikel im Fluidbett,

Fig. 2 das Verfahrensschema einer Wirbelschichtanlage,

Fig. 3 das Verfahrensschema einer abgewandelten Wirbelschichtanlage,

Fig. 4 ein Diagramm über die Abhängigkeit der Effektivität der Schwefeleinbindung von der Temperatur,

Fig. 5 das Verfahrensschema einer weiteren abgewandelten Wirbelschichtanlage.

Aus Untersuchungen von Wirbelschichtaschen sind einige generelle Abhängigkeiten der Ascheneigenschaften ermittelt worden.

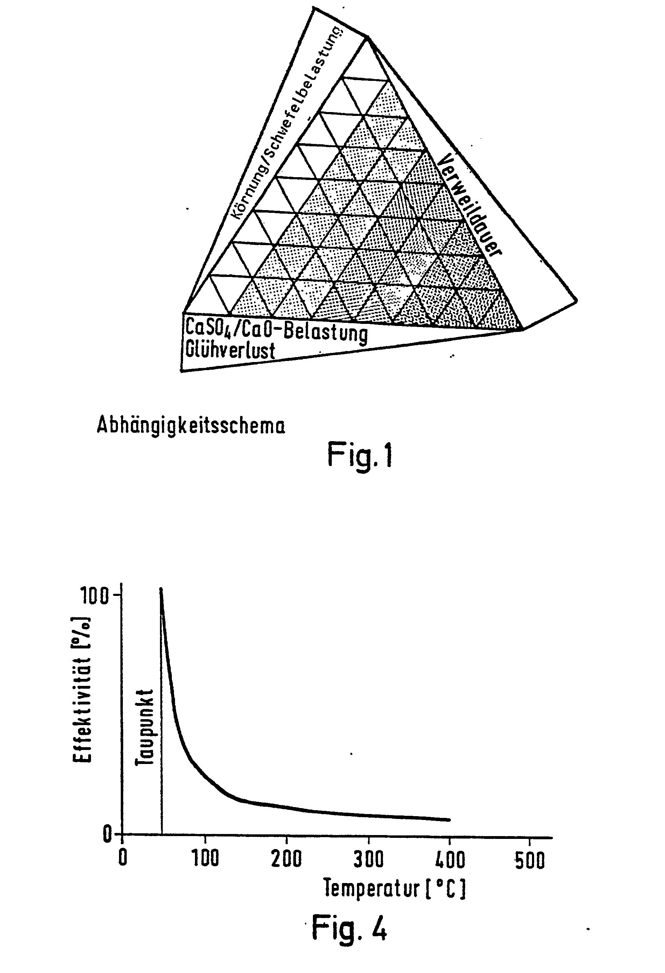

Wie Fig. 1 zeigt, wird der Glühverlust überwiegend beeinflußt durch die

- Körnung des Einsatzmaterials und die
- Verweildauer der Partikel in der Brennzone.

Weiterhin zeigt Fig. 1, daß auch der Anhydritanteil und seine Entwässerungsstufe beeinflußt werden durch die

- Körnung des Brennmaterials und die
- Reaktionsstrecke von $SO_3$ und CaO (Verweil- bzw. Kontaktzeit), weiterhin durch die
- Kalkzugabe in das Fluidbett.

Der Branntkalkanteil ist abhängig von der

- Kalkart und Sorte, der
- Reaktionstemperatur, sowie der
- Reaktionsstrecke von $SO_3$ und CaO (Verweil- bzw. Kontaktzeit).

Die kristallinen Quarzteile sind abhängig von

- Korngrößenverteilung des Brennstoffs und der
- Brenntemperatur.

Wie aus Fig. 1 hervorgeht, nehmen die Glühverluste und die Anhydrit- und die Kalkbelastung ab, wenn der Feinstkornanteil vermindert und die Verweilzeit der Partikel im Fluidbett verlängert werden.

Die drei Variablen sind entsprechend diesem Schema

- die Korngrößenverteilung des Einsatzstoffes und seine Schwefelbelastung
- die Verweilzeit des Brennstoffes im System
- die Belastung des Abbrandes durch Glührückstand und Anhydrit und Branntkalk.

Auf den Einsatzbrennstoff wird man im allgemeinen bei bestehenden Anlagen kaum Einfluß haben, bei Neuanlagen sollte dieser Einflußgröße jedoch gebührend Rechnung getragen werden.

Der Ausbrand des Einsatzmaterials ist, wie bereits ausgeführt, abhängig von der Verweilzeit. Zirkulierende Wirbelschichtanlagen haben damit keine Probleme. In anderen Anlagen sollte die Verweilzeit durch eine Rezirkulierung der Asche im Teilstrom verlängert werden, um dadurch den Glühverlust unter 4% zu senken.

Größere Probleme treten gewöhnlich durch Kalkzugaben und die gewählte Kalkart auf. Bei einer Kalkzugabe zwischen 7 und 10 Gew.-% ist mit einem Anhydritanteil über 6% zu rechnen, und der Gesamtanteil der Kalkverbindung in der Asche beträgt bis zu 12 Gew.-%.

Überwiegend wird zur Schwefeleinbindung gemahlenes Kalksteinmehl unterschiedlicher Qualität eingesetzt, welches mit dem Einsatzbrennstoff gemeinsam in das Fluidbett eingegeben wird. Man geht davon aus, daß das Kalksteinmehl im Fluidbett entsäuert wird und den $SO_3$-Gehalt in ausreichendem Maße einbindet.

Die Aschen werden aus Handlings-Gründen in Bunkern zu einer Gesamtasche zusammengeführt und dort zur Minderung der Staubbelästigung beim Abtransport mit Wasser bedüst. Bisher durchgeführte Aschenuntersuchungen weisen für diese Gesamtasche nur einen relativ schmalen Einsatzbereich aus.

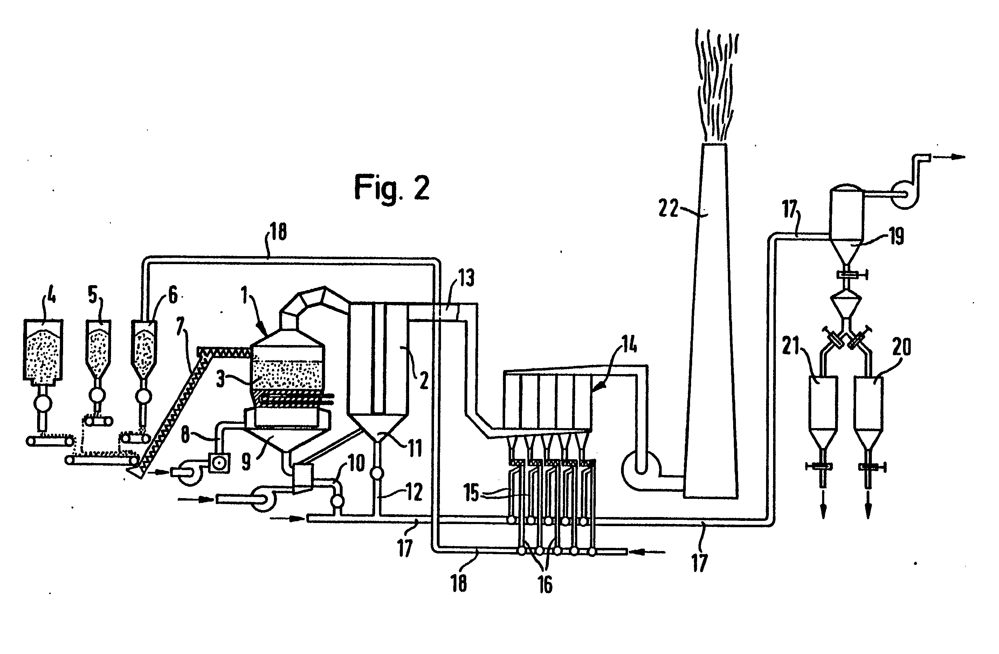

In Fig. 2 ist mit 1 ein Wirbelschichtreaktor und mit 2 ein nachgeschalteter Abhitzekessel bezeichnet. In die Wirbelschicht 3 werden aus einem Vorratsbehälter 4 Brennstoff (Kohle), einem weiteren Vorratsbehälter 5 Additive (Kalk) und einem dritten Vorratsbehälter 6 kalkhaltige Flugasche über eine Transporteinrichtung 7 eingebracht. Die für den Betrieb der Wirbelschicht erforderliche Luft gelangt über Leitung 8 in das System.

Die im Wirbelschichtreaktor 1 anfallende Bettasche wird im Aschebehälter 9 gesammelt und über einen Austrag 10 in eine Sammelleitung 17 ausgetragen. Die 950° C heißen Abgase gelangen in den Abhitzekessel 2, in dessen Tiefstem 11 Kesselasche abgelagert wird. Diese gelangt über einen Austrag 12 ebenfalls in die Sammelleitung 17. Die noch 300° C heißen Abgase aus dem Abhitzekessel 2 gelangen über einen Kanal 13 in ein Schlauchfilter 14, in dem die Flugasche abgetrennt wird. Die 250° C heiße Flugasche gelangt entweder über Austräge 15 in die Sammelleitung 17 oder über Austräge 16 in eine Rückführleitung 18, die zum Vorratsbehälter 6 führt. Dem Schlauchfilter 14 ist ein Kamin 22 nachgeschaltet. Die Gesamtasche wird über die Leitung 17 einem Zyklon 19 aufgegeben, in dem die Asche abgeschieden wird und Abzugsbehältern 20 und 21 zugeführt wird.

Während die Bettasche in einem Kornbereich > 3 mm anfällt, hat die Kesselasche eine Körnung < 3 mm und die Flugasche umfaßt ein Feinstkornkollektiv < 1 mm.

Es empfiehlt sich, die Bett- und Kesselasche getrennt von der Filterasche zu gewinnen. Diese Aschearten sind, sowohl einzeln als auch miteinander kombiniert, in vielen Bereichen einsatzfähig, weil sie einen relativ geringen Anteil an Restkohlenstoff und vergleichswëise geringe Bestandteile an Kalkverbindungen aufweisen und ab der Sandfraktion zementverträglich sind.

Einsatzmöglichkeiten sind zu sehen in der Bau- und Baustoffindustrie, die sich mit der Herstellung von Mörteln und Betonen oder von Leichtbeton und Leichtbetonformsteinen befaßt sowie in den Bereichen Grundbau und Straßenbau.

Im Hinblick auf ihre mechanisch- physikalischen Eigenschaften ist im Rahmen bisher durchgeführter Untersuchungen eine weitgehende Übereinstimmung des Verhaltens der körnigen Mineralstoffe aus Abbränden mit natürlichen Mineralstoffen bzw. Böden gleicher Körnung festgestellt worden. Das gilt besonders im Hinblick auf die Verdichtbarkeit, die Scherfestigkeit und die Tragfähigkeit der körnigen Mineralstoffe aus Abbränden. Die Vermischung von Kesselasche und Bettasche kann vor teilhaft sein, weil das daraus entstehende breite Kornband die Eigenschaften des Materials für bodenmechanische Einsatzfälle verbessert.

Die Verwendung der Filterasche wirft wegen des verhältnismäßig hohen Kalk- und Anhydritanteils spezielle Probleme auf. Es hat sich aber gezeigt, daß dieses feinkörnige Material als Zuschlag für Steine, die hydrothermal gehärtet werden, einsetzbar ist. Das gilt sowohl für hochverdichtete wie geschäumte Steinarten, wenn diese witterungsgeschützt und für ungenormte Mörtel und Betone mit geringen Festigkeitsansprüchen verwendet werden.

Derzeit werden die Einsatzmöglichkeiten insbesondere auf folgenden Gebieten gesehen:

- Verwendung in ungenormten Quellbetonen bzw. Quellmörteln mit geringen Festigkeitsansprüchen und eingeschränkter Nutzungsdauer;
- Einbau in witterungs- bzw. wassergeschützten Bereichen;
- Einbau zur Trockenlegung bzw. Bodenverbesserung im Bereich unbelasteter oder schwach belasteter Flächen;
- Verwendung als Zuschlagstoff bei verdichteten oder geschäumten Formsteinen, bei denen die hydrothermale Härtung die Primär- und Sekundärabbindung zeitlich zusammenfaßt.

Bessere Einsatzmöglichkeiten sind gegeben, wenn der Glühverlust unter 4% gesenkt wird und die Bett- und Kesselaschen nicht über 3 Gew.-% an Anhydrit und Branntkalk enthalten. Dieses Ziel ist erreichbar, wenn Bett- und Kesselasche separat abgezogen wird und eine Rezirkulierung der Filterasche erfolgt.

Einen Überblick über die individuelle Einsatzmöglichkeit anfallender Aschen gibt die Tabelle 1 auf Seite 10.

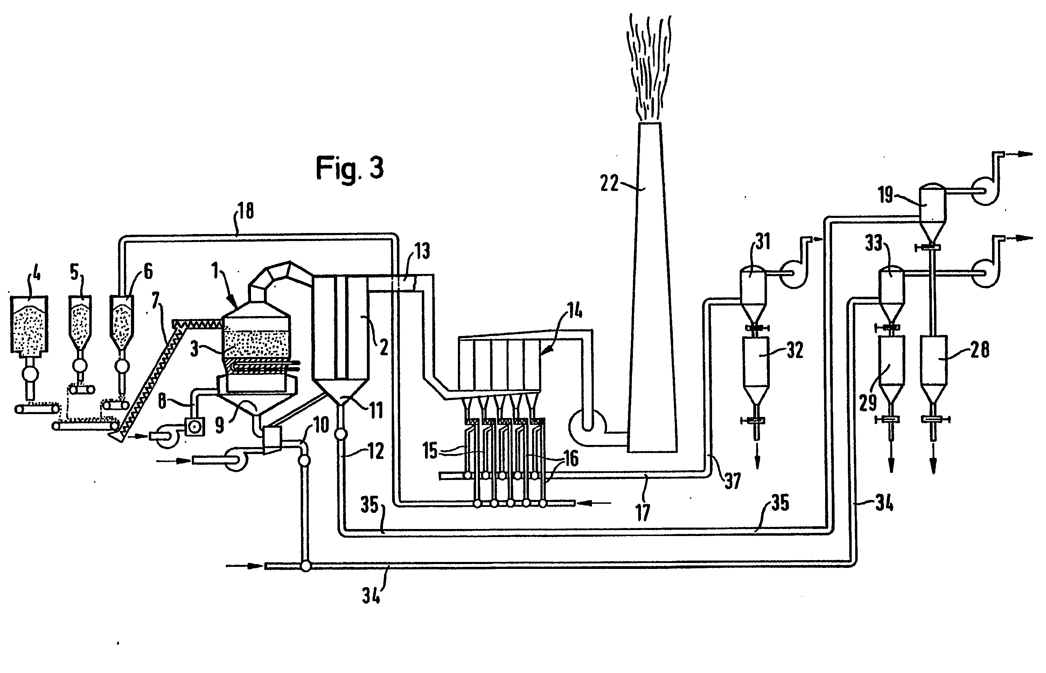

In Fig. 3 ist das Verfahrensschema einer abgeänderten Wirbelschichtanlage aufgeführt.

Gegenüber der in Fig. 2 beschriebenen Wirbelschichtanlage weist diese abgeänderte Wirbelschichtanlage folgende Änderungen auf:

Die aus dem Wirbelschichtreaktor 1 abgezogene Bettasche wird in einer getrennten Leitung 34 einem Zyklon 33 aufgegeben und in einen separaten Vorratsbehälter 29 geführt. Entsprechend gelangt die Kesselasche aus dem Abhitzekessel 2 über eine Leitung 35 in den Zyklon 19 und anschließend in einen gesonderten Vorratsbehälter 28 für Kesselasche. Auch die Flugasche aus dem Schlauchfilter 14 wird über eine separate Leitung 37 einem Zyklon 31 aufgegeben und in einem ebenfalls separaten Sammelbehälter 32 für Flugasche gespeichert.

Gegenüber der Wirbelschichtanlage gemäß Fig. 2 erfolgt somit eine unmittelbare Trennung der einzelnen Ascheströme, die deren weitere Verarbeitung zu einzelnen Sorten erleichtert. Wenn es die Einsatzzwecke erfordern, können sortierte Produkte zu gewünschten Kornbändern zusammengestellt werden.

## Tabelle 1

**Schwefeleinbindung durch Zugabe von Kalksteinmehl in das Fluidbett**  — STUFE 1

| Trockene Schwefeleinbindung | | | | |
|---|---|---|---|---|
| Reaktionsmittel | Kalziumkarbonat (CaCO$_3$) als Kalksteinmehl | | | |
| Aufgabeart | Fluidbett (Temperatur ca. 850° C) | | | |
| 1. Reaktion | Entsäuerung zu CaO | | | |
| 2. Reaktion | Verbindung im Gasstrom von SO$_3$ + CaO $\longrightarrow$ CaSO$_4$ (+ Überschuß an CaO) | | | |
| 3. Reaktion | Entwässerung zu Anhydrit (II – I) (+ Überschuß an CaO) | | | |

**Verwendungsmöglichkeit der Abbrände**

| Bett- und Kesselasche, Rest-C < 4% | Filterasche, Rest-C < 4% | Filterasche, Rest-C 4–10% | Filterasche, Rest-C > 10% |
|---|---|---|---|
| – Tiefbau/Straßenbau | – Porenbeton mit Kalkbindung | – Entsäuerung von Böden | – Nachverbrennung |
| – Bodenmechanik · Trocknung · Bodenaustausch · Bodenverbesserung | – Verbesserung der Körnungslinien von Zuschlägen für kalk- oder gipsgeb. Produkte · Kalk-Bergesteine · Gipsplatten · Gipsformteile | – Auflockerung von Böden | – Verschnittmaterial |
| – Zuschlag für Leichtbaustoffe | – Abdichtungen von Deponien und Teichen | – Verbesserung der Wasserhaltung von Böden | |
| – Dämmstoff für metallurgische Prozesse | | – Verbesserung der Deponiebedingungen von Flotationsbergen | |
| | | – Bergschadenvorsorge | |
| | | – Auffüllungen von Poldern | |

– ungenormte Mörtel und Betone mit geringen Festigkeitsansprüchen und kurzer Nutzungsdauer (U.T.Baustoff)

In einem weiteren Behandlungsschritt wird erreicht, daß der Überschußkalk, der sich mit dem Kalziumsulfat in der Filterasche sammelt, nicht wie bisher als Branntkalk anfällt.

Dessen Ablöschreaktionen sind vermutlich für die Anregung des Anhydrits und damit für die Quellvorgänge verantwortlich. Bei der bisher üblichen Kalksteinmehlzugabe in die Wirbelschicht wurde davon ausgegangen, daß die Reaktionen des Kalkes gegen $SO_2$ bzw. $SO_3$ bereits im Fluidbett erfolgen. Das ist nach vorliegenden Beobachtungen nur sehr unvollkommen der Fall. Der hohe Anteil an Kalziumkarbonat, der bei einfachem Durchlauf durch die Gesamtanlage im Filter 14 anfällt, deutet darauf hin, daß die Verweilzeit nicht ausreicht, um das Karbonat zu entsäuern und um anschließend mit dem $SO_3$ zu reagieren.

Besonders das mit dem teilweise sehr feuchten Aufgabegut eingegebene Kalksteinmehl muß zunächst einmal trocknen, um dann auf die Kalcinierungstemperatur, die bei ca. 900° C beginnt, erhitzt zu werden. Wegen der Mahlfeinheit des Kalksteinmehls wird ein Großteil des Karbonates unmittelbar nach dem Trocknungsvorgang in den Gasstrom ausgetragen. Erst die Rezirkulation der kalkhaltigen Asche, bzw. die Verweilzeit in der zirkulierenden Wirbelschicht bewirkt die gewünschte Entsäuerung und die Reaktionsbereitschaft mit dem Sulfat bei günstigem Molverhältnis. Hinsichtlich der Entsäuerungsprobleme und auch zur Vermeidung des mit der Kalzinierung verbundenen Energieverlustes sollte bereits entsäuerter Kalk (Branntkalk) trocken und möglichst mit der Primärluft in das Fluidbett eingeschleust werden. Aber eine Entlastung der Filterasche ist damit nicht erreicht.

Um Branntkalk wegen seiner ungünstigen Wirkung zu vermeiden, muß im nächsten Schritt die Schwefeleinbringung bei möglichst niedriger Reaktionstemperatur erfolgen. Einen Überblick über die Reaktionsabläufe unterschiedlicher Kalkarten zeigt nachstehende Tabelle 2.

Tabelle 2

| Mahlen | | |
|---|---|---|
| Kalksteinmehl | $CaCO_3$ | Kalziumkarbonat |
| Entsäuern | $CO_2 \uparrow$ | |
| Branntkalk | $CaO$ | Kalziumoxid |
| Löschen | | |
| gelöschter Kalk (Hydratkalk) | $Ca(OH)_2$ | Kalziumhydroxid |

- Der Reaktionseffekt - Kalk/Schwefel - steigt mit sinkender Reaktionstemperatur
- daher ist das Naßverfahren das wirkungsvollste, (es entfällt bei kleinen und mittelgroßen Anlagen).
- Bei trockenen oder quasi trockenen Verfahren ist die Reaktivität in der Nähe des Taupunktes am wirkungsvollsten.

Reaktionsverlauf (Ca/S)

$$SO_2 \ + \ H_2O \quad \longrightarrow \quad H_2SO_3 \qquad \text{(schwefelige Säure)}$$

$$H_2SO_3 \ + \ Ca(OH)_2 \quad \longrightarrow \quad CaSO_4 \ + \ 2H_2O \qquad \text{(Dihydrat oder Roh-}$$
$$\text{gips)}$$

$$\downarrow$$

$$2CaSO_4 \ + \ 1/2 \ H_2O \quad (\alpha\text{-Halbhydrat)}$$

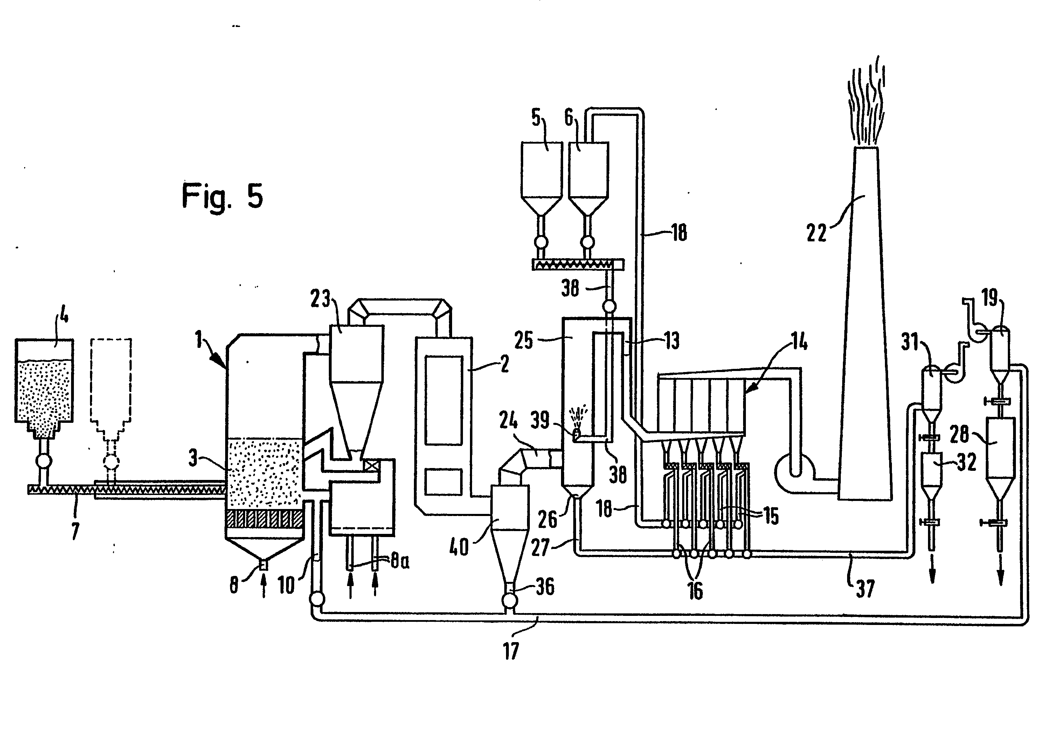

In Fig. 4 ist die Abhängigkeit der Effektivität der Schwefeleinbindung von der Temperatur dargestellt. Der Vorteil der Schwefeleinbindung bei niedrigen Temperaturen liegt in Folgendem:

- Der Hydratkalk hat eine wesentlich größere innere Oberfläche als der Branntkalk und bietet daher eine größere Reaktionsfläche.

- Der eingesetzte Kalk durchläuft nicht die Brennzone, verbraucht also keine Energie und aktiviert sich nicht zu Branntkalk.

- Das Reaktionsmittel befindet sich in einem begrenzten Anlagenbereich.

- Das Reaktionsprodukt fällt als Rohgips (Dihydrat) und Kalkstein (Kalziumkarbonat) an.

- Der Kalk kann wie bisher in einem trockenen Verfahren den Schwefel einbinden.

- Die Kalkbelasteten Aschemengen sind auf 10 Gew.-% der Gesamtaschen reduziert und können in weiteren Behandlungsschritten aufgearbeitet und in der Gipsindustrie eingesetzt werden.

In der Fig. 5 ist ein weiteres Verfahrensschema einer Wirbelschichtanlage dargestellt.

Bei dieser Anlage erfolgt gegenüber der Anlage in Fig. 3 die Additivzugabe und die Rückführung der Flugasche nicht in den Wirbelschichtreaktor 1, sondern in einen nachgeschalteten Apparat 25, in dem die Rauchgase bereits stark abgekühlt sind.

Bei dieser zirkulierenden Wirbelschichtanlage wird ein Teil der Flugasche durch den dem Wirbelschichtreaktor 1 unmittel bar nachgeschalteten Zyklon 23 aus dem Rauchgas abgezogen und rezirkuliert. Die erforderliche Transportluft gelangt über Zuführungen 8a in einen Apparat 41 und von dort in eine Rückführleitung 42. Ein weiterer Zyklon 40 reduziert den restlichen Feststoff im Rauchgas hinter dem Abhitzekessel 2. Die abgeschiedene Kesselasche wird über eine separate Leitung 36 der Leitung 17, dem Zyklon 19 und dem Vorratsbehälter 28 zugeführt.

Die nur noch mit dem Flugstaubfeinsten beladenen Abgase gelangen über den Kanal 24 in einen Apparat 25.

Über diesem Apparat 25 sind die Behälter 5 für die Additive und 6 für die rückgeführte Flugasche angeordnet. Beide Komponenten werden über eine Leitung 38 in den Apparat 25 eingeführt und dort über eine Sprühdüse 39 dem Abgas aufgegeben. Ausfallende Flugasche und Additive sammeln sich im Tiefsten 26 des Apparates 25 und werden von dort über eine Leitung 27 der Flugascheleitung 37 zugeführt, von wo sie über Zyklon 31 in den Flugaschebehälter 32 gelangen.

Besonders effektiv ist das trockene Sorptionsverfahren mit Hydratkalk, wenn das Rauchgas vor der Reaktionszone (Apparat 25) zur Feststoff-Vorabscheidung über den Zyklon 40 geführt wird. Auf diese Wiese wird bereits der größte Teil der Flugasche (ca. 70 Gew.-%) kalkfrei gewonnen.

Verfahrenstechnisch findet die eigentliche Reaktion im Apparat 25, einem erweiterten Bereich der Abgasführung 13 statt. Der Kalk wird trocken bei 39 eingeblasen, gegebenenfalls vermischt mit einem Teil der - Reaktionsmittel enthaltenden - Filterasche. Es hängt vom Einzelfall ab, welche Temperaturen im Bereich der Kalkaufgabestelle 39 vorliegen. Günstig sind Temperaturen zwischen 90 und 70° C, wobei die hohe Feuchte der Rauchgase, die durch die Feuchtigkeit des Aufgabebrenn stoffs (Flotationsberge mit Restfeuchte von ca. 30%) gegeben ist, reaktionsfreundlich genutzt wird. Sollte das Abgas noch nicht auf die optimale Temperatur abgesunken sein, besteht die Möglichkeit, vor der Reaktionsstrecke durch Wassereindüsung die gewünschte Temperatur einzustellen.

Zusammengefaßt liegt der Vorteil eines Trockensorptionsverfahrens mit Kalziumhydroxid darin, daß

- geringe Kalkmengen aufgewandt werden müssen,

7

- der Reaktionsverlauf kontrollierbarer abläuft,

- die mit Kalk beaufschlagten Flugaschenmengen nur 20 - 30% der Gesamtflugasche betragen,

- die Volumenänderungen durch das Ablöschen des Branntkalks vermieden werden,

- das Reaktionsprodukt Kalziumsulfat nicht mehr in der stark entwässerten Stufe CaSO₄ + CaO + SO₃, sondern als Dihydrat anfällt.

Die verhältnismäßig kleinen Mengen an Flugasche und Reaktionsprodukt können wesentlich kostengünstiger aufgehaldet werden, oder sie können von mehreren Anlagen gesammelt, oxidiert und dann als Ausgangsmaterial z. B. der Gipsindustrie zur Verfügung gestellt werden.

**Patentansprüche**

1. Verfahren zur Herstellung von körnigen Zuschlagstoffen aus Kohleabbränden von Wirbelschichtanlagen mit Bettemperaturen < 900° C und unter Kalkzugabe, gekennzeichnet durch folgende Maßnahmen
    a) Verwendung von Brennstoffkornkollektiven mit niedrigem Feinstkornanteil;
    b) Regulierung der Verweildauer der gröberen Partikel im Wirbelbett bis zum Ausbrand und bis zur Entwässerung der Tonminerale;
    c) wiederholte Rückführung der mit dem Gasstrom ausgetragenen feineren Partikel in die Wirbelschicht bis zum Ausbrand und bis zur Entwässerung der Tonminerale;
    d) Dosierung der kalkhaltigen Additive entsprechend dem Schwefelgehalt (2-faches der stöchiometrischen Menge);
    e) Auswahl der Brennstoffkollektive und Additive mit der Maßgabe, daß die als Asche anfallenden körnigen Mineralstoffe
    - einen Glühverlust ≦ 4 Gew.-%
    - einen Sulfatgehalt ≦ 3 Gew.-%
    - einen Branntkalkgehalt ≦ 3 Gew.-%
    - einen Chloridgehalt ≦ 0,1 Gew.-%
    aufweisen.

2. Verfahren zur Herstellung von körnigen Mineralstoffen aus Kohleabbränden nach Anspruch 1, dadurch gekennzeichnet, daß Flugaschen, Bettaschen und Kesselaschen getrennt gesammelt und weiterverarbeitet werden.

3. Verfahren zur Herstellung von körnigen Mineralstoffen aus Kohleabbränden nach Anspruch 2, dadurch gekennzeichnet, daß die Aschen sortiert und zu Kornbändern zusammengestellt werden.

4. Verfahren zur Herstellung von körnigen Mineralstoffen aus Kohleabbränden nach Anspruch 3, dadurch gekennzeichnet, daß die Kornbänder so zusammengestellt wurden, daß sie als Zuschlagstoffe für Mörtel und Betone verwendbar sind.

5. Verfahren zur Herstellung von körnigen Mineralstoffen aus Kohleabbränden nach Anspruch 3, dadurch gekennzeichnet, daß die Aschen so sortiert werden daß die Flugasche 1 - 0 mm als Zuschlagstoff für Quellbetone und Quellmörtel verwendbar ist.

6. Verfahren zur Herstellung von körnigen Mineralstoffen aus Kohleabbränden nach Anspruch 1, dadurch gekennzeichnet, daß ein Brennstoff verwendet wird, dessen C-Gehalt eine selbstgängige Verbrennung ermöglicht.

7. Verfahren zur Herstellung von körnigen Mineralstoffen aus Kohleabbränden nach Anspruch 1, dadurch gekennzeichnet, daß die Kalkzugabe als entsäuerter Kalk (CaO) mit einem BLAINE-Wert 2000 cm²/g, vorzugsweise vorgewärmt, mit der Primärluft durch den Düsenboden in das Fluidbett erfolgt.

8. Verfahren zur Herstellung von körnigen Mineralstoffen aus Kohleabbränden in Abwandlung von Anspruch 1, dadurch gekennzeichnet, daß die Kalkzugabe als Hydratkalk (Ca(OH₂)) und außerhalb des Wirbelschichtreaktors in den Rauchgasstrom, vorzugsweise in einer Temperaturzone von 90 bis 70° C erfolgt.

**Claims**

1. Method for production of granular additive materials from coal combustion products from fluidized bed apparatus with a bed temperature less than 900°C and with the addition of lime, characterized by the following measures
    a) the use of fuel particle accretions with low proportion of fine particles;
    b) control of the dwell time of the coarser particles in the fluid bed until they are burned up and up to the point where the mineral clay has been dehydrated;
    c) repeated recycling of the finer particles fully treated in the gaseous stream into the fluidized bed until they are burned up and up to the point where the mineral clay has been dehydrated;
    d) dispensing the lime-containing additive according to its sulphur content (twice the stoichiometric amount);

e) selecting the fuel particle accretions and additive with the result that the granular mineral substance falling as ash comprises
– a glue content ≤ 4 % by weight
– a sulphate content ≤ 3 % by weight
– a burnt lime content ≤ 3 % by weight
– a chloride content ≤ 0.1 % by weight

2. Method for the production of granular mineral materials from coal combustion products according to claim 1, characterized in that fly ash, bed ash and furnace ash are separated together and further processed.

3. Method for the production of granular mineral materials from coal combustion products according to claim 2, characterized in that the ashes are sorted and collected by grain size.

4. Method for the production of granular mineral materials from coal combustion products according to claim 3, characterized in that the grain sizes are useful as additives for mortar and cement.

5. Method for the production of granular mineral materials from coal combustion products according to claim 3, characterized in that the ashes are so sorted that the fly ash 1–0 mm proportion is useful as additive for pouring concrete and pouring mortar.

6. Method for the production of granular mineral materials from coal combustion products according to claim 1, characterized in that a fuel is used whose carbon content facilitates a self-sustaining combustion.

7. Method for the production of. granular mineral materials from coal combustion products according to claim 1, characterized in that the lime addition is effected as burnt lime (CaO) with a BLAINE-value of 2000 cm²/g, preferably heated, into the fluid bed with the primary air through the nozzle floor.

8. Method for the production of granular mineral materials from coal combustion products as a modification of claim 1, characterized in that the lime addition is effected as slated lime (Ca(OH$_2$)) and outside the fluidized bed reactor in the fume gas stream, preferably in a temperature range of 90 to 70° C.

**Revendications**

1. Procédé de fabrication de matériaux d'addition en grains à partir de combustion de charbons dans des installations à lit fluidisé comportant des températures de lit inférieures à 900°C et avec addition de calcaire, caractérisé par les mesures suivantes:
   a) utilisation d'une répartition granulométrique du combustible comportant une faible proportion de fines;
   b) Régulation de la durée de séjour des particules les plus grosses dans le lit fluidisé jusqu'à combustion totale et jusqu'à déshydratation des minéraux argileux;
   c) Retour répété, dans le lit fluidisé, des particules plus fines entraînées avec le courant de gaz jusqu'à combustion totale et jusqu'à déshydratation des minéraux argileux;
   d) Dosage des additions calcaires en ce qui concerne la teneur en soufre (double de la quantité stéchiométrique);
   e) Choix de la répartition granulométrique du combustible et des additions, en se fixant que les matières minérales en grains produits comme cendres présentent:
   – une perte au feu inférieure ou égale à 4 % en poids
   – une teneur en sulfate inférieure ou égale à 3 % en poids
   – une teneur en chaux anhydre inférieure ou égale à 3 % en poids
   – une teneur en chlorure inférieure ou égale à 0,1 % en poids.

2. Procédé de fabrication de matériaux d'addition en grains à partir de combustion de charbons suivant la revendication 1, caractérisé en ce que des cendres volantes, des cendres de lit fluidisé et des cendres de chaudière sont stockées et retravaillées séparément.

3. Procédé de fabrication de matériaux d'addition en grains à partir de combustion de charbons suivant la revendication 2, caractérisé en ce que les cendres sont triées et rassemblées en tranches granulométriques.

4. Procédé de fabrication de matériaux d'addition en grains à partir de combustion de charbons suivant la revendication 3, caractérisé en ce que les tranches granulométriques sont rassemblées de façon à pouvoir être utilisées comme produits d'addition pour des bétons et des mortiers.

5. Procédé de fabrication de matériaux d'addition en grains à partir de combustion de charbons suivant la revendication 3, caractérisé en ce que les cendres volantes sont triées de telle façon que les cendres volantes 0 – 1 mm sont utilisables comme produit d'addition pour des bétons ou des mortiers gonflants.

6. Procédé de fabrication de matériaux d'addition en grains à partir de combustion de charbons suivant la revendication 1, caractérisé en ce que l'on utilise un combustible dont la teneur en carbone permet une auto-combustion.

7. Procédé de fabrication de matériaux d'addition en grains à partir de combustion de charbons suivant la revendication 1, caractérisé en ce que l' addition de calcaire se fait avec l' air primaire dans le lit fluidisé, sous forme de chaux décarbonatée (CaO) présentant un indice de BLAINE de 2000 cm²/g, avantageusement préchauffée, à travers la sole à tuyères.

8. Procédé de fabrication de matériaux d'addition en grains à partir de combustion de charbons, an variante à la revendication 1, caractérisé en ce que l'addition de calcaire se fait dans le courant de fumées, avantageusement à une température de 90 à 70°C sous forme de chaux hydratée (CA(OH²)) et en dehors du réacteur à lit fluidisé.

EP 0 238 048 B1

Abhängigkeitsschema

## Fig. 1

## Fig. 4

# Fig. 2

EP 0 238 048 B1

Fig. 3

EP 0 238 048 B1

Fig. 5

EP 0 238 048 B1